# EUROPEAN PATENT APPLICATION

(11) **EP 4 528 563 A1**
(43) Date of publication of application: **26.03.2025**
(21) Application number: 24196134.1
(22) Date of filing: 23.08.2024
(51) Int. Cl.: G06F 21/56, H04L 9/40

(54) **MALWARE DETECTION USING EXECUTION CHAIN CLUSTERS**

(30) Priority: 21.09.2023 US 202318471995
(71) Applicant: VMware LLC, Palo Alto, CA 94304 (US)
(72) Inventor: Ortolani, Stefano, Twickenham, TW1 4JA (GB); Mariani, Sebastiano, Goleta, 93117 (US); Boyarchuk, Oleg, 88069 Tettnang (DE); Vigna, Giovanni, Santa Barbara, 93103 (US)
(74) Representative: Dilg, Haeusler, Schindelmann Patentanwaltsgesellschaft mbH

(57) **Abstract**

A framework for detecting malware, and in particular for identifying the malware families to which detected malware samples belong, is provided. In one set of embodiments, the framework receives known malware samples, builds execution chains for the samples, and clusters the execution chains using a similarity metric, resulting in execution chain clusters that correspond to malware families. The framework then uses the clusters to detect whether an unknown sample is malicious, and more specifically whether the unknown sample is part of a malware family represented by one of the clusters.

## Description

### Background

Unless otherwise indicated, the subject matter described in this section should not be construed as prior art to the claims of the present application and is not admitted as being prior art by inclusion in this section.

Malicious software (malware) poses a significant threat to computer networks and users, and failure to mitigate this threat can be catastrophic for organizations and individuals. There is a significant body of research on methods for detecting malware, but these existing methods can be evaded by malware families that evolve their infection techniques over time.

### Brief Description of the Drawings

FIG. 1 depicts an example malware detection system.
FIG. 2 depicts example execution chains.
FIG. 3 depicts a malware detection system according to certain embodiments.
FIG. 4 depicts a flowchart for performing offline clustering according to certain embodiments.
FIG. 5 depicts a flowchart for performing online clustering according to certain embodiments.

### Detailed Description

In the following description, for purposes of explanation, numerous examples and details are set forth in order to provide an understanding of various embodiments. It will be evident, however, to one skilled in the art that certain embodiments can be practiced without some of these details or can be practiced with modifications or equivalents thereof.

Embodiments of the present disclosure are directed to a novel framework for detecting malware, and in particular for identifying the malware families to which detected malware samples belong. A malware family is a grouping of malware that shares certain common properties, such as being derived from the same codebase or being attributable to the same authors or threat actors. Examples of well-known malware families include Emotet and Agent Tesla.

In one set of embodiments, the framework of the present disclosure involves receiving known malware samples, building execution chains for the samples, and clustering the execution chains using a similarity metric, resulting in execution chain clusters that correspond to malware families. As used herein, an execution chain for a malware sample is a tree of program executions that is triggered by the sample to infect a target machine.

Upon creating these execution chain clusters, the framework can use the clusters to detect whether an unknown sample is malicious, and more specifically whether the unknown sample is part of a malware family represented by one of the clusters. Significantly, because each execution chain cluster encompasses a range of similar execution chains (and thus a range of similar infection techniques), this framework is effective against malware families that gradually change/evolve their infection techniques over time.

### 1. Example System and Solution Architecture

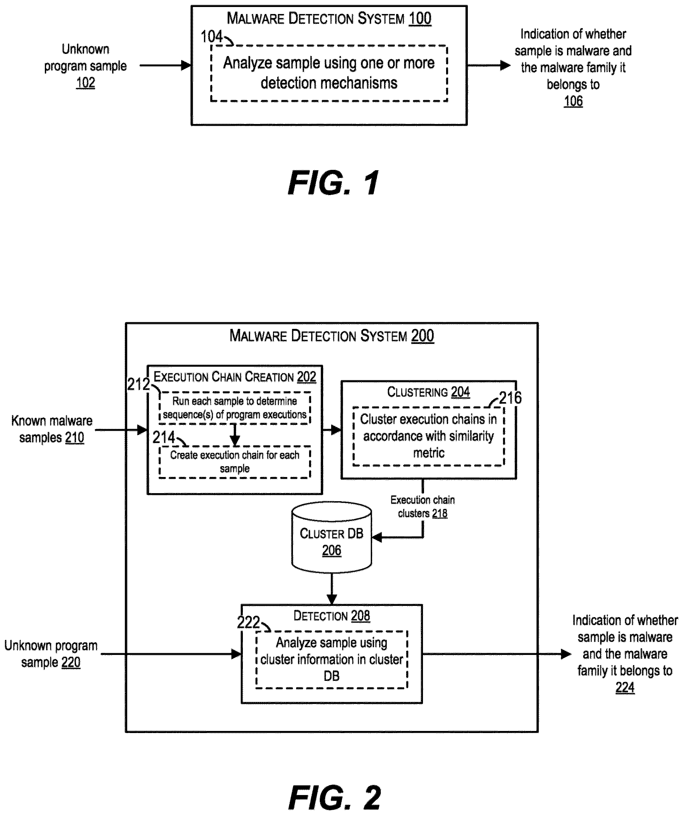

FIG. 1 is a simplified block diagram of an example malware detection system 100 that may implement the framework of the present disclosure. Malware detection system 100 can run on any physical or virtual computer system or group of such systems known in the art. For example, in one set of embodiments malware detection system 100 can run on a set of servers in a public or private cloud computing environment.

Generally speaking, malware detection system 100 is designed to receive an unknown program sample 102 (e.g., an executable binary or a document with executable code), analyze the sample using one or more detection mechanisms (reference numeral 104), and output an indication 106 of whether the sample is malicious (i.e., is malware) or not. In the case where unknown sample 102 is detected as being malware, system 100 is also designed to output an indication of the malware family to which the sample belongs per the analysis at 104. This information may be used by, e.g., analysts in an organization's security operations center (SOC) to triage and remediate the threat represented by the sample.

Existing malware detection mechanisms generally focus on static properties of malware or rely on lists of known/detected infection techniques. For example, one such mechanism may have a rule indicating that malware family X infects its targets using techniques A, B, and C and thus all unknown samples that exhibit A, B, and C is a member of X (and conversely, any unknown samples that do not exhibit A, B, and C is not a member of X). However, it is becoming increasingly common for malware families to evolve their infection techniques over time in an attempt to evade detection. For instance, in the example above, some members of malware family X may transition to using infection techniques A, B, and D. These "evolved" members of X would not be detected via the rule identifying techniques A, B, and C.

To address the foregoing and other similar issues, FIG. 2 depicts an enhanced malware detection system 200 that implements a novel detection framework according to embodiments of the present disclosure. This framework includes an execution chain creation component 202, a clustering component 204, a cluster database 206, and a detection component 208. Components 202-208 may be implemented in software, in hardware, or a combination thereof.

As shown in FIG. 2, execution chain creation component 202 is configured to receive a plurality of known malware samples 210 (i.e., program samples that are known to be malicious), run each sample in a sandbox to identify the sequence(s) of program executions that it uses to infect its targets (reference numeral 212), and create an execution chain for each sample using the program execution information (reference numeral 214). These execution chains are essentially trees of program names that indicate the infection techniques employed by their corresponding malware samples.

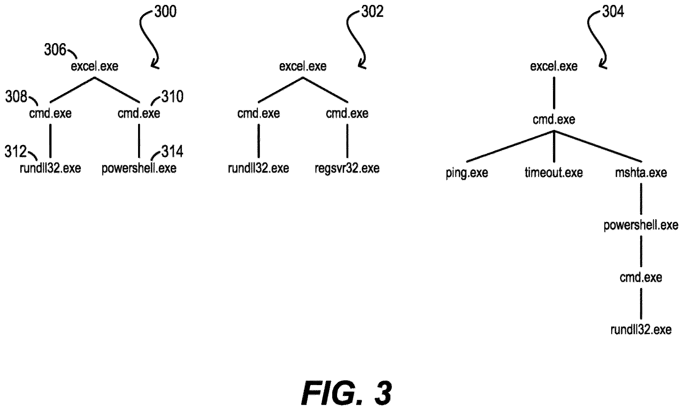

For instance, FIG. 3 depicts three example execution chains 300, 302, and 304 that may be created by component 202. As shown, execution chain 300 includes a root node 306 comprising the program name excel. exe that points to two child nodes 308 and 310 each comprising the program name cmd. exe. Node 308 points to a further child node 312 comprising the program name rund1132 . exe and node 310 points to a further child node 314 comprising the program name powe r she 11. exe. This means that the malware sample corresponding to execution chain 300 initiates its infection process via an invocation of excel. exe, which in turn calls cmd. exe twice (e.g., via a macro within an Excel worksheet). The first invocation of cmd. exe thereafter calls rundll32. exe and the second invocation of cmd. exe thereafter calls powershell.exe, thereby completing the infection. For example, rund1132 .exe may download a malicious payload onto the target machine and powers. exe may execute the payload. Execution chains 302 and 304 can be interpreted in a similar manner.

Returning now to FIG. 2, clustering component 204 is configured to receive the execution chains created by execution chain creation component 202 and cluster these together using, e.g., a machine learning-based clustering algorithm in accordance with a similarity metric, such that similar execution chains are placed in the same cluster (reference numeral 216). Clustering component 204 may use any similarity metric known in the art to perform this clustering, such as tree edit distance (which is the minimum number of node edit operations needed to transform one tree into another). For example, execution chains 300 and 302 of FIG. 3 may be placed in the same cluster because they have a tree edit distance of only 1 (and thus are almost identical), while execution chain 304 may be placed in a separate cluster from chains 300 and 302 because it has a much larger tree edit distance with respect to those two chains (and thus is significantly different).

Upon creating the execution chain clusters, clustering component 204 can store them (or a representation thereof, such as cluster signatures) in cluster database 206. These clusters (reference numeral 218) can be understood as corresponding to malware families, where each member of a given family employs infection techniques that are similar, but not necessarily identical, to other family members.

Finally, detection component 208 is configured to receive an unknown program sample 220, analyze sample 220 using the cluster information in cluster database 206 (reference numeral 222), and output an indication 224 of whether sample 220 is malicious and, if so, the malware family it belongs to. For example, in the scenario where cluster database 206 comprises entire clusters, detection component 208 can check whether the execution chain for the unknown sample 220 falls within one of the clusters according to the similarity metric. If the answer is yes, detection component 208 can conclude that the sample is malware and is a member of the malware family corresponding to that cluster.

Alternatively, in the scenario where cluster database 206 comprises cluster signatures, detection component 208 can compute an execution chain signature for unknown sample 220 and check whether the sample signature matches any of the cluster signatures. If the answer is yes, detection component 208 can conclude that the sample is malware and is a member of the malware family corresponding to the cluster with the matched signature.

With the general framework described above, several advantages are achieved. First, because each execution chain cluster encompasses a range of similar execution chains (and thus a range of similar infection techniques), this framework can more robustly detect malware families that evolve/change their infection techniques over time. For example, if the members of a malware family X evolve their infection techniques from execution chain 300 in FIG. 3 to execution chain 302, the framework will still detect unknown samples that exhibit chain 302 as being members of X because chains 300 and 302 will both be part of the same cluster.

Second, the framework of the present disclosure can flexibly support two different clustering approaches, referred to as offline clustering and online clustering, to achieve different goals. With offline clustering (detailed in section (2) below), the framework can receive and cluster a corpus of known malware samples into execution chain clusters, without regard to the timing at which those samples were originally collected. At a later time, the framework can receive and analyze unknown samples using the created clusters. This approach is straightforward to implement and works well for many common detection use cases.

With online clustering (detailed in section (3) below), the framework can receive and cluster known malware samples in a streaming manner as they are found/detected (e.g., at customer sites, etc.). Clusters that reach a threshold size are deemed to correspond to a currently active malware family (or malware campaign). Concurrently with the clustering process, the framework can receive and analyze unknown samples using the created clusters. This approach allows for an understanding of whether a sample that is detected as malware is part of an ongoing malware family/campaign, which can be useful to analysts in focusing their attention and prioritizing their response to that malware threat.

It should be appreciated that the foregoing description is illustrative and not intended to limit embodiments of the present disclosure. For example, although each node of the execution chains shown in FIG. 3 simply identifies a program that is called/executed at that node, in some embodiments each node may also include the specific parameters invoked with that program during the infection process. By including this additional parameter information in the execution chains, it is possible to create execution chain clusters that more tightly match the specific infection techniques employed by malware families (at the cost of potentially increasing the number of false negative results for system 200).

Further, although FIG. 2 depicts a particular arrangement of framework components, other arrangements are possible (e.g., the functionality attributed to a particular component may be split into multiple components, components may be combined, etc.). One of ordinary skill in the art will recognize other variations, modifications, and alternatives.

### 2. Offline Clustering

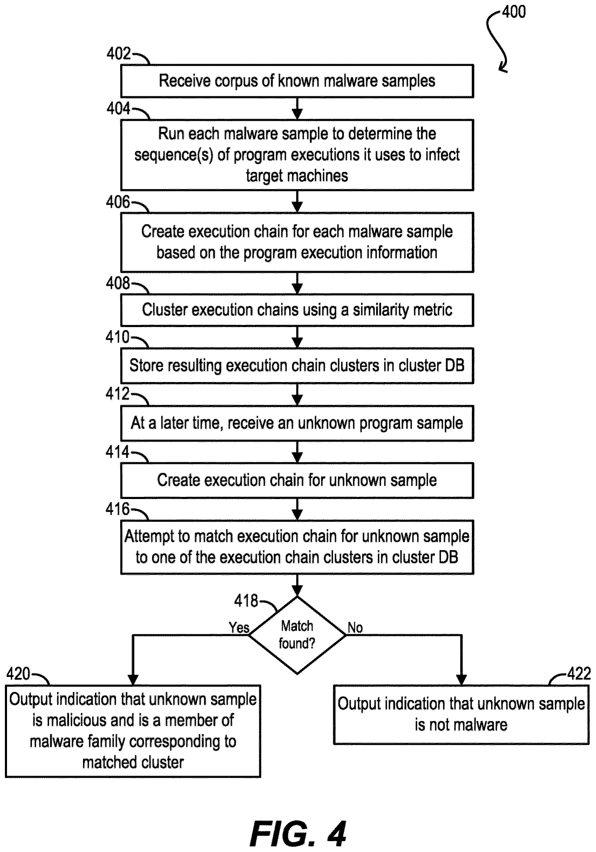

FIG. 4 depicts a flowchart 400 that may be executed by malware detection system 200 of FIG. 2 using its framework components 202-208 for performing offline clustering of execution chains according to certain embodiments.

Starting with step 402, malware detection system 200 can receive a corpus of known malware samples from one or more sources. For example, these samples may be received from a malware sample database that was populated with sample information over some preceding time period (e.g., the past six months).

At steps 404 and 406, malware detection system 200 run each malware sample (in, e.g., an isolated sandbox environment) to determine the sequences of program executions it uses to infect target machines and can create an execution chain for the sample based on this information. Malware detection system 200 can then cluster the execution chains in accordance with a similarity metric (step 408) and store the resulting execution chain clusters (or representations thereof) in its cluster database (step 410).

At a later point in time, malware detection system 200 can receive an unknown program sample (step 412), create an execution chain for it (step 414), and attempt to match the execution chain of the unknown sample to one of the execution chain clusters created at 408 and held in the cluster database (step 416). If a match is found (step 418), malware detection system 200 can output an indication that the unknown sample is malicious, and in particular is a member of the malware family corresponding to the matched cluster (step 420).

Alternatively, if a match is not found at 418, malware detection system 200 can output an indication that the unknown sample is not malware (step 422).

### 3. Online Clustering

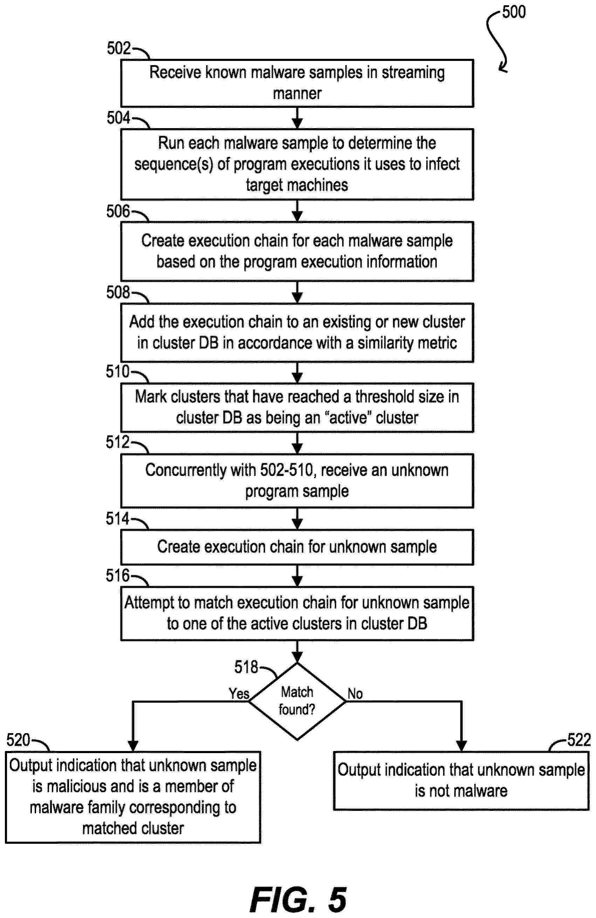

FIG. 5 depicts a flowchart 500 that may be executed by malware detection system 200 of FIG. 2 using its framework components 202-208 for performing online clustering of execution chains according to certain embodiments.

Starting with step 502, malware detection system 200 can receive a plurality of known malware samples from one or more sources in a streaming fashion (i.e., as they are found/detected). For example, these samples may be received via a real-time telemetry system from customer sites.

At steps 504, 506, and 508, malware detection system 200 run each malware sample (in, e.g., an isolated sandbox environment) to determine the sequences of program executions it uses to infect its target machines, create an execution chain for the sample based on this information, and add the execution chain to an existing cluster (or create a new cluster) in its cluster database in accordance with a similarity metric. Further, malware detection system 200 can mark execution chain clusters that have reached a threshold size (e.g., a certain number of execution chains) in the database as being an "active" cluster that corresponds to a current malware family/campaign (step 510).

Concurrently with 502-510, malware detection system 200 can receive an unknown program sample (step 512), create an execution chain for it (step 514), and attempt to match the execution chain of the unknown sample to one of the active clusters held in the cluster database (step 516). If a match is found (step 518), malware detection system 200 can output an indication that the unknown sample is malicious, and in particular is a member of an ongoing malware family/campaign corresponding to the matched cluster (step 520).

Alternatively, if a match is not found at 518, malware detection system 200 can output an indication that the unknown sample is not malware (step 522).

Certain embodiments described herein can employ various computer-implemented operations involving data stored in computer systems. For example, these operations can require physical manipulation of physical quantities-usually, though not necessarily, these quantities take the form of electrical or magnetic signals, where they (or representations of them) are capable of being stored, transferred, combined, compared, or otherwise manipulated. Such manipulations are often referred to in terms such as producing, identifying, determining, comparing, etc. Any operations described herein that form part of one or more embodiments can be useful machine operations.

Further, one or more embodiments can relate to a device or an apparatus for performing the foregoing operations. The apparatus can be specially constructed for specific required purposes, or it can be a generic computer system comprising one or more general purpose processors (e.g., Intel or AMD x86 processors) selectively activated or configured by program code stored in the computer system. In particular, various generic computer systems may be used with computer programs written in accordance with the teachings herein, or it may be more convenient to construct a more specialized apparatus to perform the required operations. The various embodiments described herein can be practiced with other computer system configurations including handheld devices, microprocessor systems, microprocessor-based or programmable consumer electronics, minicomputers, mainframe computers, and the like.

Yet further, one or more embodiments can be implemented as one or more computer programs or as one or more computer program modules embodied in one or more non-transitory computer readable storage media. The term non-transitory computer readable storage medium refers to any storage device, based on any existing or subsequently developed technology, that can store data and/or computer programs in a non-transitory state for access by a computer system. Examples of non-transitory computer readable media include a hard drive, network attached storage (NAS), read-only memory, random-access memory, flash-based nonvolatile memory (e.g., a flash memory card or a solid state disk), persistent memory, NVMe device, a CD (Compact Disc) (e.g., CD-ROM, CD-R, CD-RW, etc.), a DVD (Digital Versatile Disc), a magnetic tape, and other optical and non-optical data storage devices. The non-transitory computer readable media can also be distributed over a network coupled computer system so that the computer readable code is stored and executed in a distributed fashion.

Finally, boundaries between various components, operations, and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations can be implemented as a combined structure or component. Similarly, structures and functionality presented as a single component can be implemented as separate components.

As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. These examples and embodiments should not be deemed to be the only embodiments and are presented to illustrate the flexibility and advantages of particular embodiments as defined by the following claims. Other arrangements, embodiments, implementations, and equivalents can be employed without departing from the scope hereof as defined by the claims.

## Claims

1. A method comprising:
receiving, by a computer system implementing a malware detection system, a plurality of known malware samples;
creating, by the computer system, an execution chain for each known malware sample, the execution chain indicating one or more sequences of program executions used by the known malware sample for infecting target machines;
clustering, by the computer system, the created execution chains using a similarity metric, the clustering resulting in a plurality of execution chain clusters; and
storing, by the computer system, information pertaining to the plurality of execution chain clusters in a database of the malware detection system.

2. The method of claim 1, further comprising:
receiving an unknown program sample;
creating an execution chain for the unknown program sample; and
attempting to match the execution chain for the unknown program sample to one of the plurality of execution chain clusters based on the information stored in the database.

3. The method of claim 2, further comprising, upon matching the execution chain for the unknown program sample to an execution chain cluster:
outputting an indication that the unknown program sample is malware and is a member of a malware family corresponding to the execution chain cluster.

4. The method of claim 2 or 3, wherein the information stored in the database comprises signatures of the plurality of execution chain clusters, and wherein the attempting to match comprises:
creating a signature of the execution chain for the unknown program sample; and
attempting to match the created signature to the signatures of the plurality of execution chain clusters.

5. The method of any one of the claims 2 to 4, wherein the attempting to match comprises:
determining whether the execution chain of the unknown program samples falls within any of the plurality of execution chain clusters.

6. The method of any one of the claims 1 to 5, wherein
the plurality of known malware samples are received in a streaming manner, and wherein the clustering and the storing comprise, for each known malware sample:
adding the execution chain for the known malware sample to an existing or new execution chain cluster in the database in accordance with the similarity metric; and
marking execution chain clusters in the database that have reached a threshold size as active clusters.

7. The method of claim 6, further comprising:
receiving an unknown program sample;
creating an execution chain for the unknown program sample; and
attempting to match the execution chain for the unknown program sample to an active cluster.

8. A non-transitory computer readable storage medium having stored thereon program code executable by a computer system implementing a malware detection system, the program code embodying a method as set forth in any one of the preceding claims 1 to 7.

9. A computer system implementing a malware detection system, the computer system comprising:
a processor; and
a non-transitory computer readable medium having stored thereon program code that, when executed by the processor, causes the processor to:
receive a plurality of known malware samples;
create an execution chain for each known malware sample, the execution chain indicating one or more sequences of program executions used by the known malware sample for infecting target machines;
cluster the created execution chains using a similarity metric, the clustering resulting in a plurality of execution chain clusters; and
store information pertaining to the plurality of execution chain clusters in a database of the malware detection system.

10. The computer system of claim 9, wherein
the program code further causes the processor to:
receive an unknown program sample;
create an execution chain for the unknown program sample; and
attempt to match the execution chain for the unknown program sample to one of the plurality of execution chain clusters based on the information stored in the database.

11. The computer system of claim 10, wherein
the program code further causes the processor to, upon matching the execution chain for the unknown program sample to an execution chain cluster:
output an indication that the unknown program sample is malware and is a member of a malware family corresponding to the execution chain cluster.

12. The computer system of claim 10 or 11, wherein
the information stored in the database comprises signatures of the plurality of execution chain clusters, and wherein the attempting to match comprises:
creating a signature of the execution chain for the unknown program sample; and
attempting to match the created signature to the signatures of the plurality of execution chain clusters.

13. The computer system of any one of the claims 10 to 12, wherein the attempting to match comprises:
determining whether the execution chain of the unknown program samples falls within any of the plurality of execution chain clusters.

14. The computer system of any one of the claims 9 to 13, wherein
the plurality of known malware samples are received in a streaming manner, and wherein the clustering and the storing comprise, for each known malware sample:
adding the execution chain for the known malware sample to an existing or new execution chain cluster in the database in accordance with the similarity metric; and
marking execution chain clusters in the database that have reached a threshold size as active clusters.

15. The computer system of claim 14, wherein the program code further causes the processor to:
receive an unknown program sample;
create an execution chain for the unknown program sample; and
attempt to match the execution chain for the unknown program sample to an active cluster.
